# EUROPÄISCHE PATENTSCHRIFT

(11) **EP 1 215 402 B1**
(45) Veröffentlichungstag und Bekanntmachung des Hinweises auf die Patenterteilung: **11.05.2011**
(21) Anmeldenummer: 01128567.3
(22) Anmeldetag: 30.11.2001
(51) Int. Cl.: F16B 7/04, F16B 5/00

(54) **Befestigungsmittel**
Connecting mean
Moyen de fixation

(30) Priorität: 18.12.2000 DE 20021399 U
(43) Veröffentlichungstag der Anmeldung: 19.06.2002
(73) Patentinhaber: Dr. Hahn GmbH & Co. KG, D-41189 Mönchengladbach (DE)
(72) Erfinder: Palmowsky, Hans-Jürgen, 41836 Hückelhoven (DE)
(74) Vertreter: Kluin, Jörg-Eden

(56) Entgegenhaltungen:
- WO-A-01/36761
- CH-A- 514 098
- FR-A- 2 237 516
- US-A- 3 731 956

## Beschreibung

Die Erfindung betrifft ein Befestigungsmittel, insbesondere zur Schnellbefestigung von Bauteilen an Hohlprofilen, der dem Anspruch 1 entsprechenden Art.

Gewöhnlich werden Bauteile, wie zum Beispiel Bänder bzw. deren Rahmen- und/oder Flügelbandteile mittels einfachen Schrauben und/oder Abstandsbüchsen in dünnwandigen Hohlprofilen befestigt. Dazu müssen die Schrauben eine gewisse Länge aufweisen, um die gewünschte Wand und die Bauteilen sowie gegebenenfalls Halteplatten oder dergleichen zu durchgreifen bzw. in diese einzugreifen.

Die Schrauben weisen hierzu ein mit einem Gewinde versehenen Bereich auf und müssen über das Gewinde in die entsprechenden Gewindebohrungen eingedreht werden. Dies erfordert eine bestimmte Zeit. Wenn jedoch der zu befestigende Gegenstand oder das Bauteil schwer oder unhandlich ist, ist es nötig, diesen während der gesamten Zeit des Einführens und/oder des Festdrehens der Schrauben festzuhalten.

Es ist daher eine schnelle und einfache, lösbare Befestigungsmöglichkeit gewünscht, die zudem für schwere Lasten geeignet ist.

Ferner müssen bei Gegenständen oder Bauteilen, die über mehrere Schrauben befestigt werden, wie zum Beispiel schwere Tür- oder Fensterflügel, die Teile mit der Gewindebohrung bezüglich der Schrauben zum Befestigen zentriert werden. Dies ist insbesondere bei den oben beschriebenen, schweren Teilen ungünstig. Es ist daher ebenfalls eine Befestigungsmöglichkeit von Vorteil die ein einfaches Einführen der "Schrauben" gewährleistet.

Aus der CH 514 098 A ist ein Befestigungsmittel, insbesondere zur Schnellbefestigung von Bauteilen an Hohlprofilen bekannt. Es weist eine im wesentlichen lang gestreckte bolzenförmige Gestalt mit einem zylindrischen Bereich, mit einem zum zylindrischen Bereich im Durchmesser vergrößerten Kopfbereich, wobei der Kopfbereich eine Hinterschneidung umfasst, die in etwa parallel zu einer Befestigungswandung und in etwa senkrecht zum zylindrischen Bereich verläuft, wobei der Kopfbereich mit seiner Hinterschneidung im befestigten Zustand an einer Innenfläche der Befestigungswandung verläuft, wobei der Kopfbereich mit seiner Hinterschneidung im befestigten Zustand an einer Innenfläche der Befestigungswandung aufliegt, wobei die Hinterschneidung an ihrem äußeren Rand eine Schrägfläche umfasst, auf. Das Befestigungsmittel kann mittels Festziehmitteln gegen die Befestigungswandung gezogen werden.

Nachteilig ist bei dieser Befestigung, dass sie eine genaue Positionierung der zu befestigenden Bauteile erfordert, die insbesondere bei schweren Bauteilen nicht einfach zu bewerkstelligen ist.

Aufgabe der Erfindung ist es daher, ein Befestigungsmittel bereitzustellen, welches eine schnelle und einfache Befestigung ermöglicht und zudem für schwere Lasten geeignet ist.

Die Aufgabe wird durch in Anspruch 1 wiedergegebene Erfindung gelöst.

Das Befestigungsmittel, insbesondere zur Schnellbefestigung von Bauteilen an Hohlprofilen umfasst eine im wesentlichen lang gestreckte bolzenförmige Gestalt, mit einem zylindrischen Bereich, mit einem zum zylindrischen Bereich im Durchmesser vergrößerten Kopfbereich, wobei der Kopfbereich eine Hinterschneidung aufweist, die in etwa parallel zu einer Befestigungswandung und in etwa senkrecht zum zylindrischen Bereich verläuft, wobei der Kopfbereich mit seiner Hinterschneiung im befestigten Zustand an einer Innenfläche der Befestigungswandung aufliegt, wobei die Hinterschneidung an ihrem äußeren Rand eine Schrägfläche aufweist und wobei das Befestigungsmittel mittels Festziehmittel gegen die Befestigungswandung angezogen werden kann, ist eine schnelle und einfache Befestigung der Bauteile oder Gegenstände möglich. Dazu wird das Befestigungsmittel in eine entsprechende Bohrung am zu befestigenden Gegenstand eingeführt und mit der Hinterschneidung des Kopfbereichs eingehakt. Anschließend wird das Befestigungsmittel durch die Festziehmittel gegen die Befestigungswandung angezogen, wodurch gleichzeitig der zu befestigende Gegenstand zwischen Hinterschneidung und einer Befestigungsschiene festgezogen wird. Durch die besondere noch zu beschreibende Ausgestaltung der Festziehmittel ist dieses Anziehen bzw. Festziehen sehr einfach und schnell möglich. Die Hinterschneidung weist erfindungsgemäß an ihrem äußeren Rand eine Schrägfläche auf.

Das zu befestigende Bauteil kann somit vor dem Festziehen auf dem Befestigungsmittel aufgesetzt werden, wobei es nicht festgehalten werden muss, da es an der Hinterschneidung bzw. deren Schrägfläche bereits eingehakt ist und daher nicht wegrutschen kann. Da weiterhin erfindungsgemäß in Einbaulage der Abstand zwischen der Hinterschneidung des Kopfbereichs und der Befestigungsschiene kleiner als die Dicke der Befestigungswandung und der Abstand zwischen dem äußeren Ende der Schrägfläche des Kopfbereichs und der Befestigungsschiene größer als die Dicke der Befestigungswandung ist, kann in einem ersten Schritt der zu befestigende Gegenstand an der Schrägfläche der Hinterschneidung voreingehakt werden. Dann wird das Befestigungsmittel leicht gelöst und der Gegenstand rutscht durch sein eigenes Gewicht von der Schrägfläche auf den zylindrischen Bereich des Befestigungsmittels hinter der Hinterschneidung. Das Befestigungsmittel muss anschließend nur noch festgezogen werden. Dies ist möglich, weil in Einbaulage die Befestigungswandung an den Stellen des Übergangs zwischen dem schmaleren Bereich und dem größeren Bereich der Aussparung auf der Schrägfläche des Kopfbereichs aufliegt.

Soweit im folgenden von "oben" die Rede ist, ist stets die normale Einbaulage der Bandanordnung maßgeblich, bei der die Scharnierachse vertikal steht.

Unter "Schrägfläche" wird jede Fläche verstanden, die von der horizontalen Ebene abweicht, d.h. nicht senkrecht zur Verstellrichtung läuft. Darunter sind zum Beispiel Kugelflächen, keilförmige schiefe Ebenen und konkave oder konvexe Kugelabschnitte usw. zu verstehen.

Günstigerweise ist das Festziehmittel zumindest teilweise an dem zylindrischen Bereich ausgebildet und umfasst dabei eine im Querschnitt gesehen etwa kegelförmige Ausnehmung, welche in etwa senkrecht zur Längsmittelachse in dem zylindrischen Bereich ausgespart ist, wobei es einen verstellbaren Bolzen umfasst, welcher zum in etwa senkrecht in die kegelförmige Ausnehmung Eingreifen ausgebildet ist und in einer Befestigungsschiene aufgenommen ist. Besonders bevorzugt ist es, wenn der Bolzen als Kegelspindel ausgebildet ist. Somit kann das Befestigungsmittel durch den Bolzen bzw. die Kegelspindel, angezogen werden.

Die Kegelspindel wirkt in diesem Fall mit ihrer schrägen Fläche innerhalb der Ausnehmung auf deren der Befestigungswandung abgewandten Seite ein. Wird die Spindel daher nach unten in die Ausnehmung hinein gedreht, so wird das Befestigungsmittel durch die Spindel nach links in Richtung der Befestigungswandung, d.h. in Befestigungsrichtung, verstellt und somit angezogen.

Andererseits kann das Festziehmittel als Gewinde an dem zylindrischen Bereich ausgebildet sein, welches in eine entsprechende Gewindebohrung in einer Befestigungsschiene eingreift. Dann wird das Befestigungsmittel direkt, ähnlich einer herkömmlichen Schraube festgezogen.

Weil die Befestigungsschiene auf der Außenseite der Befestigungswandung anliegt und der zylindrische Bereich in einer entsprechenden Bohrung in der Befestigungsschiene einführbar ist, wird die Befestigungswandung durch das Befestigungsmittel gegen die Befestigungsschiene gedrückt und somit festgezogen.

Dadurch, dass in der Befestigungswandung eine in etwa schlüssellochförmige Aussparung vorhanden ist, in die das Befestigungsmittel eingreift, wobei günstigerweise der schmalere Bereich der Aussparung oben liegt und als Befestigungsstelle des Kopfbereich dient, wozu sie im Durchmesser kleiner als der Kopfbereich ausgeführt ist, oder der größere Bereich der Aussparung unten liegt und als Einhakstelle des Kopfbereichs dient, wozu sie im Durchmesser größer als der Kopfbereich ausgeführt ist, ist es möglich, den zu befestigenden Gegenstand an der Hinterschneidung des Befestigungsmittels einzuhaken, wodurch eine schnelle Befestigung ohne eine Schraubung an dem zu befestigenden Gegenstand gelingt.

Da der Kopfbereich eine in Einführrichtung abgeschrägte Fläche aufweist, kann das Befestigungsmittel besonders leicht in die oben beschriebene schlüssellochförmige Aussparung eingeführt werden. Zudem wird der Gegenstand durch die abgeschrägte Fläche in Richtung auf das Befestigungsmittel geführt, auch wenn die Aussparung und die bolzenförmige Gestalt nicht fluchten.

Weitere Einzelheiten, Merkmale und Vorteile der vorliegenden Erfindung ergeben sich unten aus der Beschreibung, den Ansprüchen und den beiliegenden Zeichnungen. Es zeigen:
- Fig. 1: ein erfindungsgemäßes Befestigungsmittel in einer Seitenansicht;
- Fig. 2: das erfindungsgemäße Befestigungsmittel aus Fig. 1 in einer Ansicht in Richtung des Pfeiles II;
- Fig. 3: das erfindungsgemäße Befestigungsmittel aus Fig. 1 im Schnitt entlang der Linie I-I;
- Fig. 4: den Einsatz eines erfindungsgemäßen Befestigungsmittels an einem Hohlprofil in einer Draufsicht auf die Innenfläche der Befestigungswan- dung in Einbaulage;
- Fig. 5: das erfindungsgemäße Befestigungsmittel aus Fig. 4 in einer Seitenan- sicht entlang der Linie III-III;
- Fig. 6: das erfindungsgemäße Befestigungsmittel aus Fig. 4 in einer Draufsicht entlang der Linie V-V;
- Fig. 7: den vergrößerten Ausschnitt X aus Fig. 5 in einem Schnitt durch die Längsmittelachse des Befestigungsmittels;
- Fig. 8: den vergrößerten Ausschnitt Z aus Fig. 6 in einem Schnitt durch die Längsmittelachse des Befestigungsmittels;
- Fig. 9: den vergrößerten Ausschnitt Y aus Fig. 4;
- Fig. 10: den Einsatz eines erfindungsgemäßen Befestigungsmittels an einem Hohlprofil in einer Draufsicht auf die Innenfläche der Befestigungswandung in befestigtem Zustand;
- Fig. 11: das erfindungsgemäße Befestigungsmittel aus Fig. 10 in einer Seitenansicht entlang der Linie VI-VI;
- Fig. 12: das erfindungsgemäße Befestigungsmittel aus Fig. 11 in einer Draufsicht entlang der Linie VIII-VIII;
- Fig. 13: den vergrößerten Ausschnitt X aus Fig. 11 in einem Schnitt durch die Längsmittelachse des Befestigungsmittels;
- Fig. 14: den vergrößerten Ausschnitt Z aus Fig. 12 in einem Schnitt durch die Längsmittelachse des Befestigungsmittels und
- Fig. 15: den vergrößerten Ausschnitt Y aus Fig. 10.

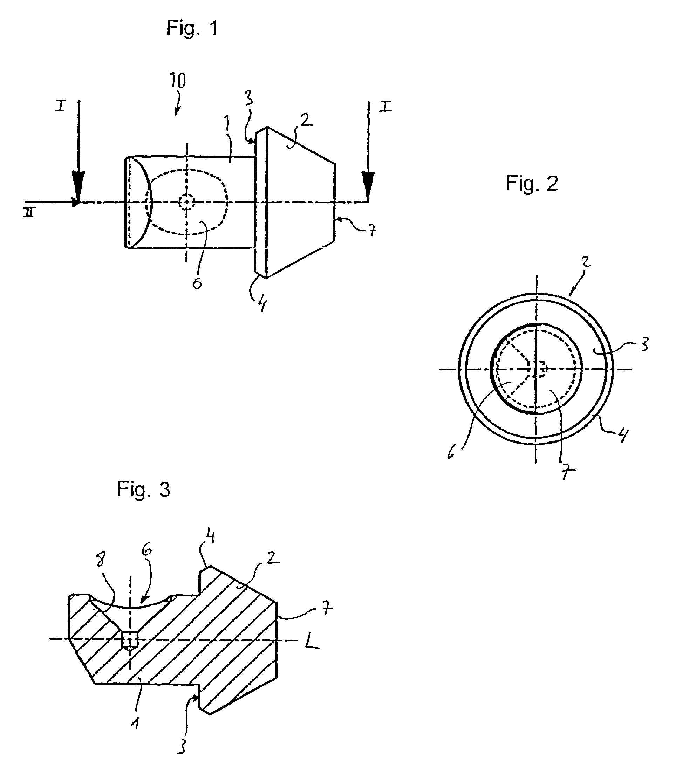

Fig. 1 zeigt ein als Ganzes mit 10 bezeichnetes Befestigungsmittel. Dieses besitzt eine im wesentlichen langgestreckte bolzenförmige Gestalt. Es besitzt ferner einen zylindrischen Bereich 1 und einen zum zylindrischen Bereich 1 im Durchmesser vergrößerten Kopfbereich 2. Der Kopfbereich 2 weist eine Hinterschneidung 3 auf, die in etwa parallel zu einer Befestigungswandung und etwa senkrecht zum zylindrischen Bereich 1 verläuft. Die Hinterschneidung weist an ihrem äußeren Rand eine Schrägfläche 4 auf, die in Richtung des zylindrischen Bereichs 1 abgeschrägt ist. Der Kopfbereich 2 läuft in Richtung des Pfeiles II vom Ende der Schrägfläche kegelförmig, schräg zu und besitzt eine stumpfe Nase 7. Eine im Querschnitt gesehen etwa kegelförmige Ausnehmung 6, welche in etwa senkrecht zur Längsmittelachse L in dem zylindrischen Bereich ausgespart ist, ist gestrichelt angedeutet.

Fig. 2 stellt das gleiche Befestigungsmittel 10, in einer Ansicht "von hinten", d.h. entlang des Pfeiles II dar. Man erkennt, daß der im Durchmesser vergrößerte Kopfbereich 2 ebenfalls eine zylindrische Grundgestalt besitzt, jedoch durch die Schrägfläche 3 nach hinten im Durchmesser abnimmt bzw. nach vorne in Richtung der stumpfen Nase 7 ebenfalls abgeschrägt ist.

Wie man insbesondere aus Fig. 3 entnehmen kann, weist die Ausnehmung 6 eine kegelförmige Innenfläche 8 auf, die, wie später noch beschrieben werden wird, zum Zusammenwirken mit einer Kegelspindel ausgebildet ist.

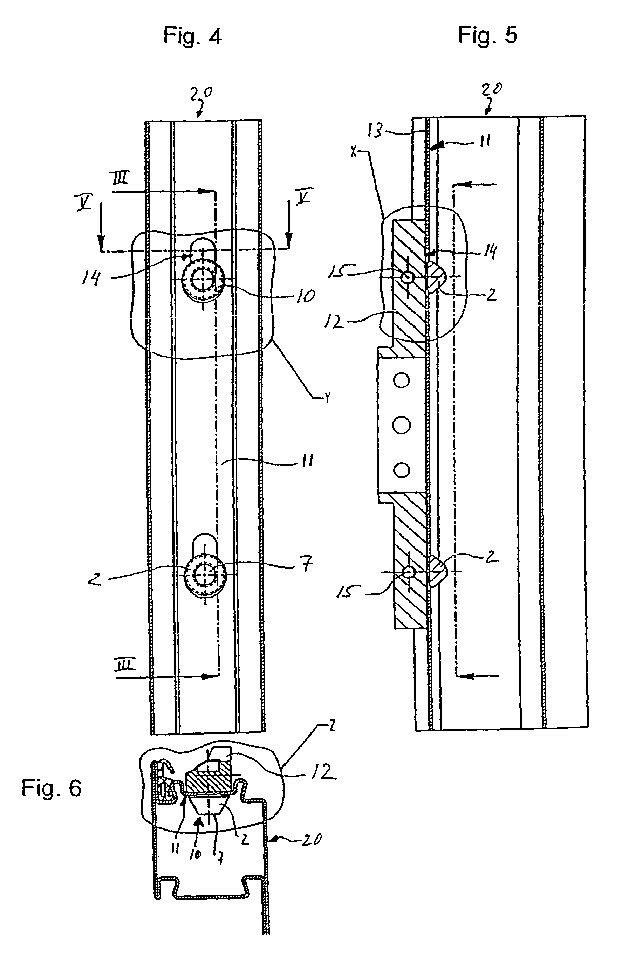

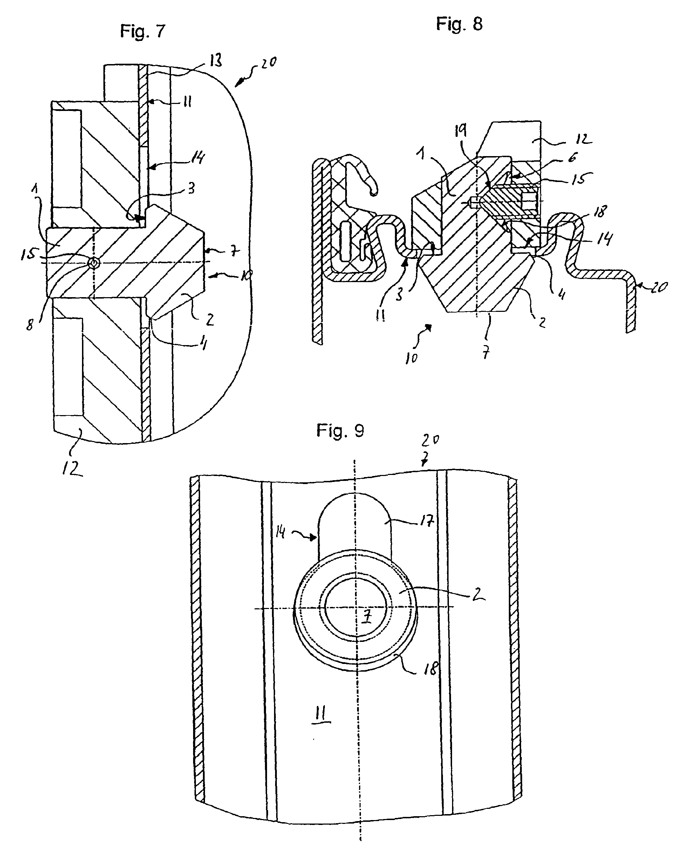

In den Fig. 4 bis 6 ist der Einsatz des erfindungsgemäßen Befestigungsmittels 10 an einem Hohlprofil 20 dargestellt. Zur genaueren Beschreibung wird ebenfalls auf die Fig. 7 bis 9 verwiesen, die entsprechend vergrößerte Ausschnitte darstellen. Wie aus Fig. 5 zu erkennen ist, wird das Hohlprofil 20 auf das Befestigungsmittel 10, welches in diesem Fall zweifach vorliegt, zunächst eingehängt. Dazu weist das Hohlprofil 20 zwei entsprechende, schlüssellochförmige Aussparungen 14 auf, wobei deren schmalerer Bereich 17 oben liegt und als Befestigungsstelle des Kopfes dient, wozu sie im Durchmesser kleiner als der Kopfbereich ausgeführt ist. Dagegen ist der größere Bereich 18 der Aussparung unten gelegen und dient als Einhakstelle des Kopfbereichs, wozu sie im Durchmesser nur geringförmig größer als der Kopfbereich selber ausgeführt ist. In der Einbaulage ist der Abstand zwischen der Hinterschneidung des Kopfbereichs und der Befestigungsschiene 12 kleiner als die Dicke der Befestigungswandung 13. Ferner ist der Abstand zwischen dem äußeren Ende der Schrägfläche des Kopfbereichs und der Befestigungsschiene 12 größer als die Dicke der Befestigungswandung 13. Daher wird in diesem ersten Schritt das Hohlprofil 20 auf der Schrägfläche 4 des Befestigungsmittels an den Stellen 16 des Übergangs zwischen dem schmaleren Bereich 17 und dem größeren Bereich 18 der Aussparung 14 auf der Schrägfläche 4 aufliegen. Das gesamte Gewicht des Hohlprofils ruht in dieser Phase also schon auf dem Befestigungsmittel. Das Befestigungsmittel selber ist mittels der Kegelspindel 15 in der Befestigungsschiene 12 festgelegt. Wie insbesondere aus Fig. 8 erkennbar ist, ist dabei die Kegelspindel vollständig in die Ausnehmung 6 eingeschraubt, welches die oben beschriebene Einbaulage definiert.

Das Hohlprofil 20 wird durch den oben beschriebenen Abstand zwischen der Schrägfläche 4 bzw. Hinterschneidung 3 des Befestigungsmittels 11 und der Befestigungsschiene 12 schon in dieser Phase ohne Spiel gehalten. Ferner ist das Hohlprofil 20 durch den zulaufenden Kopfbereich 2 des Befestigungsmittels auch bei nicht exakt fluchtender Ausrichtung des Befestigungsmittels 10 mit den Aussparungen 14 leicht einzuführen. Ferner erfolgt durch die zylindrische Gestalt des Befestigungsmittels eine Art Vorzentrierung durch das Einhängen.

Im zweiten Schritt wird die Kegelspindel 15 leicht gelöst, so daß sie von ihrer maximalen Position in der Ausnehmung 6 abweicht und somit dem Befestigungsmittel 10 eine kleine Verstellbarkeit erlaubt. Durch das Gewicht des Hohlprofils 20, welches auf der Schrägfläche 4 des Befestigungsmittels ruht, und der besonderen Gestaltung der Schrägfläche 4 wird der Abstand zwischen der Befestigungsschiene 12 und der Hinterschneidung des Befestigungsmittels 3 vergrößert, und das Hohlprofil rutscht an der Schrägfläche 4 ab, so daß das Hohlprofil 20 auf der Wand des schmaleren Bereichs 17 der Aussparung 14 auf dem zylindrischen Bereich 1 des Befestigungsmittels 10 zum Ruhen kommt. Das Hohlprofil ist nunmehr endgültig eingehakt. Da dieser Vorgang des "abrutschenden Einhakens" gleichzeitig mit dem Lösen der Kegelspindel 15 auftritt, ist der Abstand zwischen der Befestigungsschiene 12 und der Hinterschneidung 3 genau der Wandstärke der Befestigungswandung 13 angepaßt. Es tritt daher kein Spiel auf, und das Hohlprofil 20 kann nicht abkippen. Ferner kann das Befestigungsmittel 10 nicht aus der Befestigungsschiene 12 weiter herausgezogen werden, da die Kegelspindel nur leicht gelockert wurde und noch in die Ausnehmung 6 hineinragt.

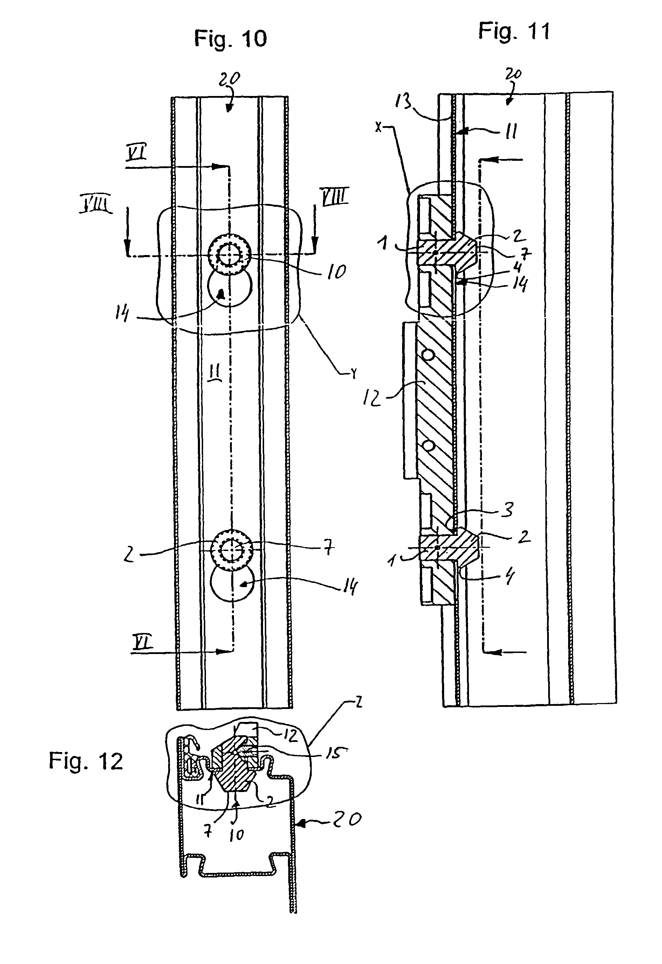

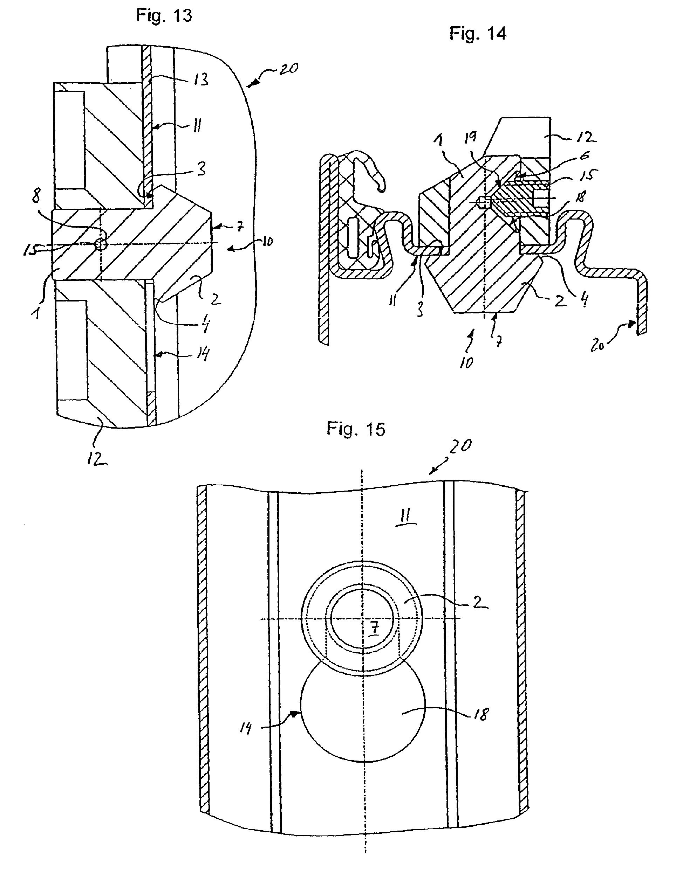

In den Fig. 10 bis 12 ist der Befestigungszustand des Hohlprofils dargestellt, wobei wiederum aus den Fig. 13 bis 15 vergrößerte Ausschnitte entnehmbar sind. Das Hohlprofil ruht nunmehr mit der Oberseite des schmalen Bereichs der Aussparung 14 auf dem zylindrischen Bereich 1 des Befestigungsmittels 10. Die Hinterschneidung 3 des Befestigungsmittels ist nunmehr von der Innenfläche 11 der Befestigungswandung 13 überdeckt, so daß das Hohlprofil beim Festziehen des Befestigungsmittels 10 mittels der Kegelspindel 15 zwischen der Hinterschneidung 3 des Befestigungsmittels und der Befestigungsschiene 12 eingeklemmt wird. Der schmalere Bereich 17 der Aussparung 14 ist dabei dem zylindrischen Bereich 1 des Befestigungsmittels 10 angepaßt und weist im Vergleich zum größeren Bereich 18 der Aussparung eine relativ große Verkleinerung auf, damit eine gute Kraftaufnahme durch die große Fläche der sich überlappenden Bereiche der Hinterschneidung 3 und der Innenfläche 11 der Befestigungswandung 13 gegeben ist.

Aus ihrer teilweise zurückgezogenen Position wird die Kegelspindel 15 nunmehr wiederum tiefer in die Ausnehmung 6 des Befestigungsmittels eingeschraubt. Die Kegelfläche 19 der Kegelspindel 15 wirkt nunmehr auf die Innenfläche 8 der Aussparung 6 ein, so daß das Befestigungsmittel 10 bzw. deren Hinterschneidung 3 beim Einschrauben der Kegelspindel 15 gegen die Innenfläche 11 der Befestigungswandung 13 bzw. gegen die Befestigungsschiene 12 angezogen wird. Durch die geeignete Wahl der Neigung der Innenfläche 8 der Ausnehmung 6 bzw. der entsprechenden Anpassung der Kegelfläche 19 der Kegelspindel 15 erfordert dieses Feststellen nur eine geringe Drehung der Kegelspindel.

Durch die geeignete Wahl der Lage der Aussparung 6 bezüglich der Hinterschneidung 3 des Befestigungsmittels und der oben erwähnten Neigung der Kegelfläche 19 bzw. der Aussparung 6 ist ein Anpassen an viele Blechstärken möglich.

Ferner können bei einem möglicherweise nötigen Hohlprofilwechsel bzw. Gegenstandswechsel alle Teile an der Befestigungsschiene 12w. einem damit verbundenen Bauteil verbleiben und durch Lockern der Kegelspindel das Bauteil bzw. das Hohlprofil von dem Befestigungsmittel gelöst werden.

## Patentansprüche

1. Befestigungsvorrichtung, mit einem Befestigungsmittel (10) und mit einer Befestigungsschiene (12), insbesondere zur Schnellbefestigung von Bauteilen an Hohlprofilen (20,
wobei das Befestigungsmittel (10) eine im Wesentlichen lang gestreckte bolzenförmige Gestalt und
einen zylindrischen Bereich (1), welcher in eine Bohrung der Befestigungsschiene hineinragt, sowie
einen zum zylindrischen Bereich (1), im Durchmesser vergrößerten Kopfbereich (2) aufweist,
wobei der Kopfbereich (2) eine Hinterschneidung (3) aufweist, die in etwa parallel zu einer Befestigungswandung (13) eines Hohlprofils und in etwa senkrecht zum zylindrischen Bereich (1) verläuft,
wobei der Kopfbereich (2) mit einer Hinterschneidung (3) im befestigten Zustand an einer Innenfläche (11) besagter Befestigungswandung (13) aufliegt, wobei das Befestigungsmittel mittels Festziehmittel gegen die Befestigungswandung angezogen werden kann,
**dadurch gekennzeichnet,**
**dass** die Hinterschneidung (3) an ihrem äußeren Rand eine Schrägfläche (4) aufweist,
wobei in Einbaulage der Abstand zwischen der Hinterschneidung (3) des Kopfbereichs (2) und der Befestigungsschiene (12) kleiner als die Dicke der Befestigungswandung (13) ist, sowie
in Einbaulage der Abstand zwischen dem äußeren Ende der Schrägfläche des Kopfbereichs (2) und der Befestigungsschiene (12) größer als die Dicke der Befestigungswandung (13) ist.

2. Befestigungsvorrichtung nach Anspruch 1, **dadurch gekennzeichnet, dass** das Festziehmittel zumindest teilweise an dem zylindrischen Bereich (1) ausgebildet ist.

3. Befestigungsvorrichtung nach Anspruch 1 oder 2, **dadurch gekennzeichnet, dass** das Festziehmittel eine im Querschnitt gesehen etwa kegelförmige Ausnehmung (6), welche in etwa senkrecht zur Längsmittelachse in dem zylindrischen Bereich (1) ausgespart ist, umfasst.

4. Befestigungsvorrichtung nach Anspruch 3, **dadurch gekennzeichnet, dass** das Festziehmittel einen verstellbaren Bolzen umfasst, welcher zum in etwa senkrecht in die kegelförmige Ausnehmung (6) Eingreifen ausgebildet und in der Befestigungsschiene (12) aufgenommen ist.

5. Befestigungsvorrichtung nach Anspruch 4, **dadurch gekennzeichnet, dass** der Bolzen als Kegelspindel (15) ausgebildet ist.

6. Befestigungsvorrichtung nach Anspruch 2, **dadurch gekennzeichnet, dass** das Festziehmittel als Gewinde an dem zylindrischen Bereich (1) ausgebildet ist, welches in eine entsprechende Gewindebohrung in einer Befestigungsschiene (12) eingreift.

7. Befestigungsvorrichtung nach einem der Ansprüche 1 bis 6, **dadurch gekennzeichnet, dass** die Befestigungsschiene (12) geeignet ist auf der Außenseite einer Befestigungswandung (13) anzuliegen.

8. Befestigungsvorrichtung nach einem der Ansprüche 1 bis 7 und einer Befestigungswandung (13) in der eine in etwa schlüssellochförmige Aussparung (14) vorhanden ist, in die das Befestigungsmittel (10) eingreift.

9. Befestigungsvorrichtung nach Anspruch 8, **dadurch gekennzeichnet, dass** der schmalere Bereich der Aussparung oben liegt und als Befestigungsstelle des Kopfbereichs (2) dient, wozu sie im Durchmesser kleiner als der Kopfbereich (2) ausgeführt ist.

10. Befestigungsvorrichtung nach Anspruch 8, **dadurch gekennzeichnet, dass** der größere Bereich der Aussparung (14) unten liegt und als Einhakstelle des Kopfbereichs (2) dient, wozu sie im Durchmesser größer als der Kopfbereich ausgeführt ist.

11. Befestigungsvorrichtung nach einem der Ansprüche 8 bis 10, **dadurch gekennzeichnet, dass** der Kopfbereich (2) eine in Einführrichtung abgeschrägte Fläche aufweist.

## Claims

1. Fastening device, with a fastening means (10) and with a fastening rail (12), in particular for the rapid fastening of components to hollow profiles (20), wherein the fastening means (10) has a substantially elongate, bolt-like design and
a cylindrical region (1) which projects into a bore in the fastening rail, and
a head region (2) of enlarged diameter in comparison to the cylindrical region (1),
wherein the head region (2) has an undercut (3) which runs approximately parallel to a fastening wall (13) of a hollow profile and approximately perpendicularly to the cylindrical region (1),
wherein, in the fastened state, the head region (2) rests with an undercut (3) on an inner surface (11) of said fastening wall (13), wherein the fastening means can be tightened against the fastening rule by means of tightening means,
**characterized**
**in that** the undercut (3) has an oblique surface (4) on the outer border thereof,
the distance between the undercut (3) of the head region (2) and the fastening rail (12) in the fitted position is smaller than the thickness of the fastening wall (13), and
the distance between the outer end of the oblique surface of the head region (2) and the fastening rail (12) in the fitted position being larger than the thickness of the fastening wall (13).

2. Fastening device according to Claim 1, **characterized in that** the tightening means is at least partially formed on the cylindrical region (1).

3. Fastening device according to Claim 1 or 2, **characterized in that** the tightening means comprises an approximately conical recess (6), as seen in cross section, which is cut out in the cylindrical region (1) approximately perpendicularly to the longitudinal centre axis.

4. Fastening device according to Claim 3, **characterized in that** the tightening means comprises an adjustable bolt which is designed for engagement approximately perpendicularly into the conical recess (6) and is received in the fastening rail (12).

5. Fastening device according to Claim 4, **characterized in that** the bolt is designed as a conical spindle (15).

6. Fastening device according to Claim 2, **characterized in that** the tightening means is designed as a thread on the cylindrical region (1), the thread engaging in a corresponding threaded bore in a fastening rail (12).

7. Fastening device according to one of Claims 1 to 6, **characterized in that** the fastening rail (12) is suitable for bearing against the outside of a fastening wall (13).

8. Fastening device according to one of Claims 1 to 7 and a fastening wall (13) in which there is an approximately keyhole-shaped cutout (14) in which the fastening means (10) engages.

9. Fastening device according to Claim 8, **characterized in that** the narrower region of the cutout is located at the top and serves as a fastening point of the head region (2), for which purpose said cutout is designed to have a smaller diameter than the head region (2).

10. Fastening device according to Claim 8, **characterized in that** the larger region of the cutout (14) is located at the bottom and serves as a hook-in point for the head region (2), for which purpose said cutout is designed to have a diameter larger than the head region.

11. Fastening device according to one of Claims 8 to 10, **characterized in that** the head region (2) has a surface which is bevelled in the insertion direction.

## Revendications

1. Dispositif de fixation, comprenant un moyen de fixation (10) et un rail de fixation (12), notamment pour la fixation rapide de composants sur des profilés creux (20),
le moyen de fixation (10) présentant une configuration en forme de boulon essentiellement allongée et
une région cylindrique (1), qui pénètre dans un alésage du rail de fixation, ainsi
qu'une région de tête (2) de diamètre agrandi par rapport à la région cylindrique (1),
la région de tête (2) présentant une contre-dépouille (3) qui s'étend approximativement parallèlement à une paroi de fixation (13) d'un profilé creux et approximativement perpendiculairement à la région cylindrique (1),
la région de tête (2) reposant avec une contre-dépouille (3) dans l'état fixé contre une surface interne (11) de ladite paroi de fixation (13), le moyen de fixation pouvant être approché au moyen de moyens de serrage contre la paroi de fixation, **caractérisé en ce que**
la contre-dépouille (3) présente sur son bord extérieur une surface oblique (4),
la distance entre la contre-dépouille (3) de la région de tête (2) et le rail de fixation (12) étant plus petite que l'épaisseur de la paroi de fixation (13) dans la position de montage, et
dans la position de montage, la distance entre l'extrémité extérieure de la surface oblique de la région de tête (2) et le rail de fixation (12) étant supérieure à l'épaisseur de la paroi de fixation (13).

2. Dispositif de fixation selon la revendication 1, **caractérisé en ce que** le moyen de serrage est réalisé au moins en partie sur la région cylindrique (1).

3. Dispositif de fixation selon la revendication 1 ou 2, **caractérisé en ce que** le moyen de serrage comprend un logement (6) de section transversale approximativement conique, qui est évidé approximativement perpendiculairement à l'axe médian longitudinal dans la région cylindrique (1).

4. Dispositif de fixation selon la revendication 3, **caractérisé en ce que** le moyen de serrage comprend un boulon réglable qui est réalisé de manière à venir en prise approximativement perpendiculairement dans le logement de forme conique (6) et qui est reçu dans le rail de fixation (12).

5. Dispositif de fixation selon la revendication 4, **caractérisé en ce que** le boulon est réalisé sous forme de broche conique (15).

6. Dispositif de fixation selon la revendication 2, **caractérisé en ce que** le moyen de serrage est réalisé sous forme de filetage sur la région cylindrique (1), lequel vient en prise dans un alésage fileté correspondant dans un rail de fixation (12).

7. Dispositif de fixation selon l'une quelconque des revendications 1 à 6, **caractérisé en ce que** le rail de fixation (12) est approprié pour s'appliquer sur le côté extérieur d'une paroi de fixation (13) .

8. Dispositif de fixation selon l'une quelconque des revendications 1 à 7, comprenant une paroi de fixation (13) dans laquelle est prévu un évidement approximativement en forme de trou de serrure (14) dans lequel vient en prise le moyen de fixation (10).

9. Dispositif de fixation selon la revendication 8, **caractérisé en ce que** la région plus étroite de l'évidement est située en haut et sert de point de fixation de la région de tête (2), de sorte qu'il est réalisé avec un diamètre plus petit que la région de tête (2).

10. Dispositif de fixation selon la revendication 8, **caractérisé en ce que** la plus grande région de l'évidement (14) est située en dessous et sert de point d'accrochage de la région de tête (2) de sorte qu'il est réalisé avec un plus grand diamètre que la région de tête.

11. Dispositif de fixation selon l'une quelconque des revendications 8 à 10, **caractérisé en ce que** la région de tête (2) présente une surface biseautée dans la direction d'insertion.
